# EUROPEAN PATENT APPLICATION

(11) **EP 4 539 232 A1**
(43) Date of publication of application: **16.04.2025**
(21) Application number: 23843393.2
(22) Date of filing: 19.07.2023
(51) Int. Cl.: H01M 50/367, H01M 50/171, H01M 50/107, H01M 50/167

(54) **BATTERY, AND BATTERY PACK AND VEHICLE COMPRISING SAME**

(30) Priority: 19.07.2022 KR 20220089218
(71) Applicant: LG Energy Solution, Ltd., Seoul 07335 (KR)
(72) Inventor: WON, Jin-Hyeok, Daejeon 34122 (KR); LEE, Kwan-Hee, Daejeon 34122 (KR)
(74) Representative: Goddar, Heinz J.
(86) International application number: PCT/KR2023/010445
(87) International publication number: WO 2024/019547

(57) **Abstract**

The present disclosure discloses a battery having a structure in which a thermal conductive member is applied to a beading portion. The battery according to one aspect of the present disclosure includes an electrode assembly; a battery housing having an opening formed on one side to accommodate the electrode assembly through the opening and including a beading portion formed by press-fitting the perimeter of an outer circumference at the opening; a top cap configured to cover the opening; and a thermal conductive member configured to fill at least a portion of the space formed by the beading portion at the outer side of the battery housing.

## Description

### TECHNICAL FIELD

The present disclosure relates to a battery having a structure in which a thermal conductive member is applied to a beading portion, and a battery pack and a vehicle including the same.

The present application claims priority to Korean Patent Application No. 10-2022-0089218 filed on July 19, 2022 in the Republic of Korea, the disclosures of which are incorporated herein by reference.

### BACKGROUND ART

Batteries have high applicability according to product groups and electrical characteristics such as high energy density, and thus, are commonly applied not only to mobile devices but also to electric vehicles (EVs) or hybrid vehicles (HEVs) driven by electric power sources.

Because batteries have primary advantage of radically reducing the use of fossil fuel as well as secondary advantage of generating no by-products that come with energy consumption, the batteries are gaining attention as a new alternative energy source for improving eco-friendliness and energy efficiency.

Types of batteries that are currently widely used include lithium-ion batteries, lithium polymer batteries, nickel cadmium batteries, nickel hydride batteries, and nickel zinc batteries. An operating voltage of a unit battery cell ranges from about 2.5 V to about 4.5 V. Accordingly, when a higher output voltage is required, a battery pack is configured by connecting a plurality of batteries in series. Also, a battery pack may be configured by connecting a plurality of batteries in parallel according to charge/discharge capacity required for the battery pack. Accordingly, the number of batteries included in a battery pack and their electric connection pattern may be set in various ways according to a required output voltage and/or charge/discharge capacity.

Recently, development is underway to increase the cell size to realize high energy density and reduce costs of battery packs.

In order to improve energy density, the size of the electrode assembly must be increased as much as possible to maximize capacity. To achieve this, it is necessary to maximize the internal space by making the battery housing as thin as possible.

However, if the thickness of the battery housing is too thin, it is disadvantageous in terms of durability of the battery housing, and the battery housing may fracture or tear in the thinned area.

In particular, the beading portion formed by pressing the perimeter of the battery housing to prevent the electrode assembly from coming off at the opening of the battery housing may be more vulnerable because it is a place where deformation has occurred once. Additionally, due to stretching of the battery housing by press-fitting, some of the areas where the beading portion of the battery housing is formed may become thinner compared to the surrounding area.

Therefore, in order to improve this, it is necessary to dissipate heat from the beading portion to the outside of the battery and/or secure improvement in structural stability.

### DISCLOSURE

### Technical Problem

The present disclosure is designed to solve the problems of the related art, and therefore the present disclosure is directed to preventing deformation and damage of the beading portion due to heat by facilitating heat transfer/release from the beading portion, which may be structurally weak, to the outside of the battery can.

In another aspect, the present disclosure is directed to preventing structural collapse by preventing the formation of pin holes in the beading portion when the battery is exposed to a high temperature environment.

However, the technical problem to be solved by the present disclosure is not limited to the above-mentioned problem, and other problems not mentioned will be clearly understood by those skilled in the art from the present disclosure described below.

### Technical Solution

A battery according to one aspect of the present disclosure to accomplish the above object may comprise: an electrode assembly; a battery housing having an opening formed on one side to accommodate the electrode assembly through the opening and including a beading portion formed by press-fitting the perimeter of an outer circumference at the opening; a top cap configured to cover the opening; and a thermal conductive member configured to fill at least a portion of the space formed by the beading portion at the outer side of the battery housing.

The thermal conductive member may extend along the perimeter of the outer circumference of the battery housing.

The thermal conductive member may be a thermal conductive adhesive.

The thermal conductive member may contain a ceramic filler.

The thermal conductive member may have a hardness of 70Sh A or higher.

The top cap may have a venting portion that is weak compared to the surrounding area.

The top cap may be insulated from the electrode assembly and the battery housing and be configured to have no polarity.

The battery may further comprise a first current collector, which includes a first coupling portion electrically coupled to the electrode assembly at the opening; and a housing coupling portion that is electrically coupled to the battery housing.

The first current collector may include a beading portion protecting portion provided between the beading portion and the electrode assembly.

The beading portion protecting portion may extend along the circumferential direction of the battery.

A battery pack according to the present disclosure may comprise the battery according to the present disclosure.

A vehicle according to the present disclosure may comprise the battery pack according to the present disclosure.

### Advantageous Effects

According to one aspect of the present disclosure, a thermal conductive member may prevent deformation and damage of the beading portion due to heat. The thermal conductive member may facilitate heat transfer and release from the beading portion to the outside of the battery. Therefore, structural collapse may be prevented by preventing pin holes from being formed in the beading portion due to the high temperature heat that is not properly discharged to the outside of the battery but accumulated. The thermal conductive member may be interposed in the beading portion, which may be structurally weak, to reinforce rigidity. Additionally, this structure may guide the movement path of gas and/or flame. Since pin holes are not created in the beading portion where rigidity is secured, gas and/or flame cannot escape and may be directed to the top cap. Therefore, gas and/or flame can be effectively discharged to the vent portion of the top cap, which will be described later. Ultimately, battery stability can be greatly improved.

According to another aspect of the present disclosure, when gas is generated inside the battery or a strong impact is applied to the battery from outside the battery, the beading portion, which is vulnerable to deformation, may be prevented from being stretched in the vertical direction. A thermal conductive adhesive may be interposed between the upper part of the beading portion and the lower part of the beading portion to prevent the upper part of the beading portion and the lower part of the beading portion from moving away from each other.

According to still another aspect of the present disclosure, by providing a beading portion protecting portion between the electrode assembly and the beading portion, the beading portion may be more effectively protected from gas and/or flame generated inside the battery. Additionally, if the first current collector and the beading portion protecting portion are formed as one piece, the production and assembly process may be facilitated.

### DESCRIPTION OF DRAWINGS

FIG. 1 is a drawing showing an electrode included in a battery according to an embodiment of the present disclosure.
FIG. 2 is a diagram showing a stack of electrode assemblies included in a battery according to an embodiment of the present disclosure.
FIG. 3 is a diagram showing a cross section of the battery according to an embodiment of the present disclosure.
FIG. 4 is a drawing showing a battery according to an embodiment of the present disclosure.
FIG. 5 is a diagram showing the flow of gas and flame inside the battery according to an embodiment of the present disclosure.
FIG. 6 is a diagram showing a cross section of a battery according to another embodiment of the present disclosure.
FIG. 7 is a diagram showing a first current collector included in the battery according to another embodiment of the present disclosure.
FIG. 8 is a diagram showing a battery pack according to the present disclosure.
FIG. 9 is a drawing showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawings. Like reference numerals refer to like elements. Additionally, in the drawings, the thickness, proportions and dimensions of components are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but it is obvious to those skilled in the art of the present disclosure that these terms are only for convenience of explanation and they may vary depending on the location of the target object or the location of the observer.

Accordingly, the embodiments described in this specification and the configurations shown in the drawings are only one of the most preferred embodiments of the present disclosure and do not represent all technical details of the present disclosure, so it should be understood that there may be various equivalents and variations that can be replaced at the time of filing this application.

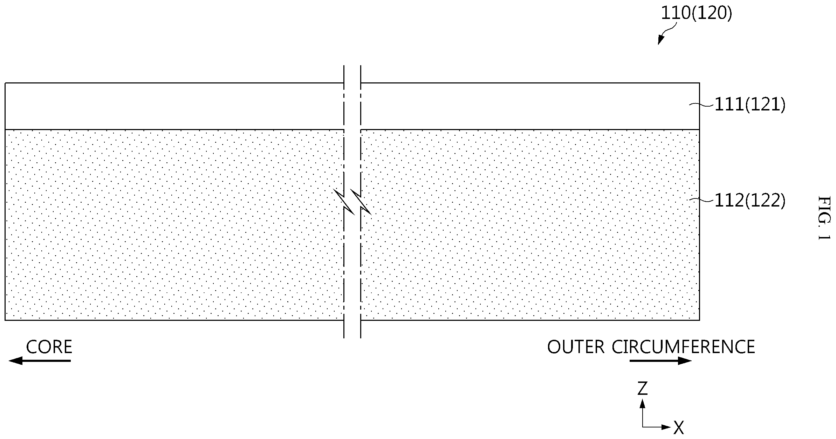

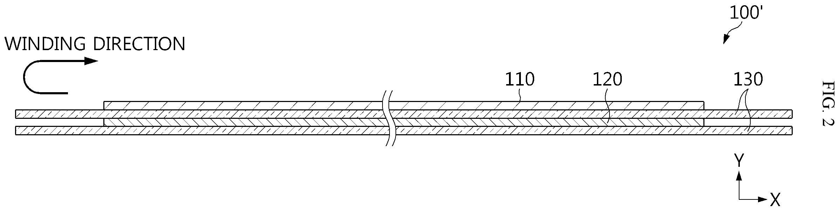

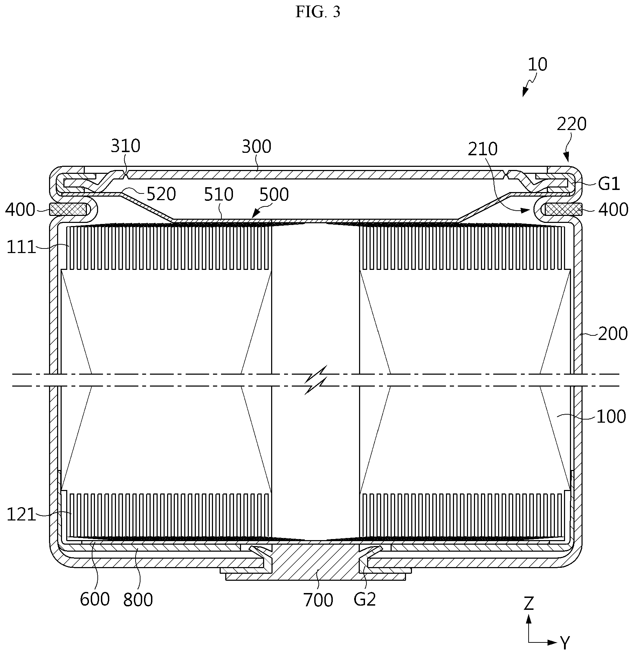

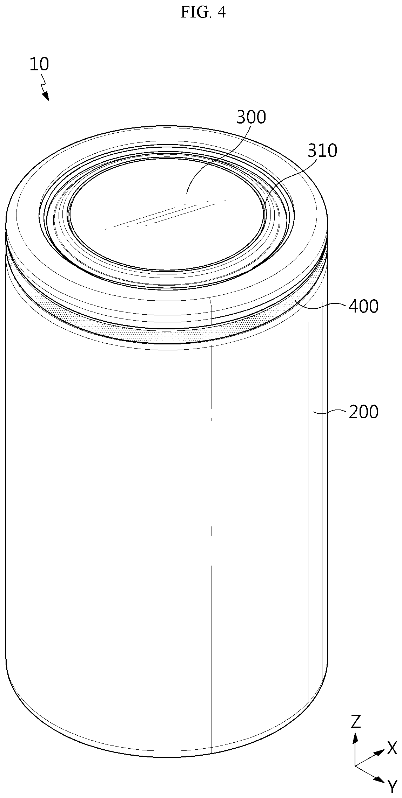

FIG. 1 is a drawing showing an electrode 110, 120 included in a battery 10 according to an embodiment of the present disclosure. FIG. 2 is a diagram showing a stack 100' of electrode assemblies 100 included in a battery 10 according to an embodiment of the present disclosure. FIG. 3 is a diagram showing a cross section of the battery 10 according to an embodiment of the present disclosure. FIG. 4 is a drawing showing a battery 10 according to an embodiment of the present disclosure.

Referring to FIGS. 1 to 4, the battery 10 may include an electrode assembly 100, a battery housing 200, a top cap 300, and a thermal conductive member 400.

The electrode assembly 100 may be formed by winding a stack 100' including a first electrode 110, a second electrode 120, and a separator 130 around the winding axis.

The stack 100', which includes the first electrode 110 including a first uncoated portion 111 not coated with an active material layer along the winding direction, the second electrode 120 including a second uncoated portion 121 not coated with an active material layer along the winding direction, and the separator 130 interposed between them, may be wound around a common winding axis to form a core and an outer circumference.

The first electrode 110 may include a first electrode plate and a first electrode active material layer 112 formed by applying a first electrode active material on at least one surface of the first electrode plate. The second electrode 120 may include a second electrode plate and a second active material layer 122 formed by applying a second electrode active material on at least one side of the second electrode plate. The first electrode 110 may include a first uncoated portion 111 on which a positive electrode active material or a negative electrode active material is not applied to the electrode plate. The second electrode 120 may include a second uncoated portion 121 on which a positive electrode active material or a negative electrode active material is not applied to the electrode plate. For example, the first uncoated portion 111 may be provided at the top of the electrode assembly 100, and the second uncoated portion 121 may be provided at the bottom of the electrode assembly 100. At least a part of the first uncoated portion 111 may function as a first electrode tab, and at least a part of the second uncoated portion 121 may function as a second electrode tab. Meanwhile, in the present disclosure, the electrode tab is not limited to being at least part of the uncoated portion. That is, an electrode tab may be provided separately and coupled to the uncoated portion.

The battery housing 200 may have an opening formed on one side. The battery housing 200 may accommodate the electrode assembly 100 through the opening. The battery housing 200 may have the polarity of the first electrode. The battery housing 200 may be made of a conductive metal material. The battery housing 200 may also accommodate an electrolyte through the opening.

The battery housing 200 may include a beading portion 210. The beading portion 210 is formed at the end adjacent to the opening and may be press-fitted inward. The beading portion 210 may have a shape in which the perimeter of the outer circumference of the battery housing 200 is press-fitted to a predetermined depth. The beading portion 210 may be formed on the upper part of the electrode assembly 100. The beading portion 210 may serve to prevent the electrode assembly 100 from moving in the height direction.

The top cap 300 may be configured to cover the opening. The top cap 300 may be configured to have no polarity. The top cap 300 may be made of a conductive metal material.

The thermal conductive member 400 may be provided at the outer side of the battery housing 200. The thermal conductive member 400 may be configured to fill at least a portion of the space formed by the beading portion 210. The thermal conductive member 400 may fill at least half of the press-fitted depth of the beading portion 210. The heat conductive member 400 may be filled so that it extends from the space formed by the beading portion 210 to the outer circumference of the battery housing 200. The thermal conductive member 400 may extend along the perimeter of the outer circumference of the battery housing 200.

The beading portion 210 is vulnerable to deformation because it is a place where deformation has occurred due to press-fitting, and since stretching of the battery housing 200 occurs in the area where the beading portion 210 is formed due to press-fitting, the thickness of the battery housing 200 may be smaller than the surrounding area. This beading portion 210 had a problem in that it is damaged by flame and/or gas or a pin hole is created when a thermal event occurs inside the battery 10.

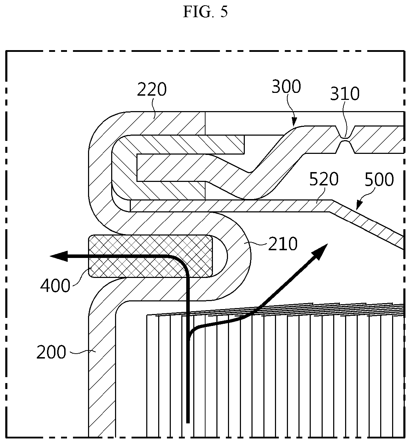

FIG. 5 is a diagram showing the flow of gas and flame inside the battery 10 according to an embodiment of the present disclosure.

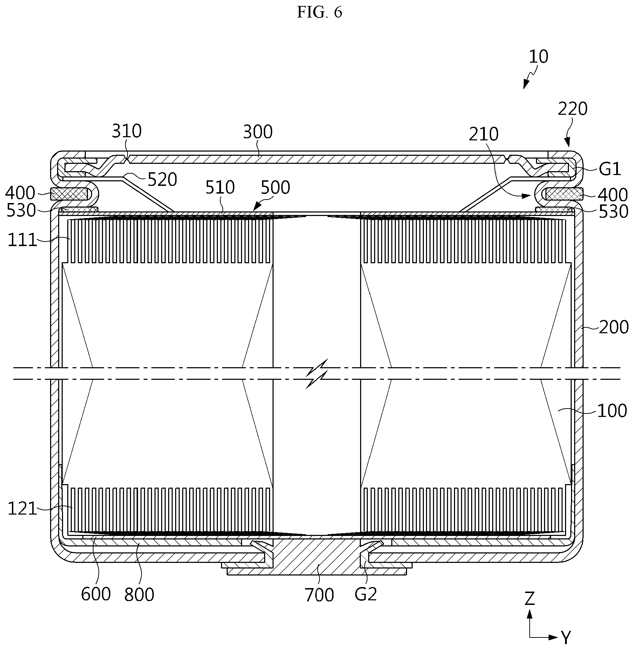

Looking at this structure of the present disclosure with reference to FIG. 6, the thermal conductive member 400 may prevent deformation and damage of the beading portion 210 due to heat. The thermal conductive member 400 may facilitate heat transfer and release from the beading portion 210 to the outside of the battery 10. Therefore, structural collapse may be prevented by preventing pin holes from being formed in the beading portion 210 due to the high temperature heat that is not properly discharged to the outside of the battery 10 but accumulated. The thermal conductive member 400 may be interposed inside the beading portion 210, which may be structurally weak, to reinforce rigidity. Additionally, this structure may guide the movement path of gas and/or flame. Since no pin hole is created in the rigid beading portion 210, gas and/or flame cannot escape and may be directed toward the top cap 300. Therefore, gas and/or flame can be effectively discharged through the vent portion 310 of the top cap 300, which will be described later. Ultimately, the stability of the battery 10 can be greatly improved.

The thermal conductive member 400 may include ceramic filler. The thermal conductive member 400 may include alumina and/or boron nitride and/or silicon nitride and/or aluminum nitride and/or aluminum hydroxide. The thermal conductive member may have a hardness of 70Sh A or higher. Through this material of the thermal conductive member 400, the rigidity of the structurally weak beading portion 210 can be strengthened.

The thermal conductive member 400 may be a thermal conductive adhesive. The thermal conductive member 400 may be a short-cure adhesive. The thermal conductive adhesive may be configured to adhere the upper part of the beading portion 210 and the lower part of the beading portion 210.

According to this configuration in the present disclosure, when gas is generated inside the battery 10 or a strong impact is applied to the battery 10 from the outside of the battery 10, the beading portion 210, which is vulnerable to deformation, may be prevented from being stretched in the vertical direction. The thermal conductive adhesive 400 is interposed between the upper part of the beading portion 210 and the lower part of the beading portion 210 to prevent the upper part of the beading portion 210 and the lower part of the beading portion 210 from moving away from each other.

Referring back to FIG. 3, the battery 10 may include a crimping portion 220 of the battery housing 200 and/or a vent portion 310 and/or a terminal 700 of the top cap 300 and/or a first current collector 500 and/or a second current collector 600 and/or an insulator 800 and/or a first gasket G1 and/or a second gasket G2.

The battery housing 200 may include a crimping portion 220. The crimping portion 220 may be formed on the upper portion of the beading portion 210. The crimping portion 220 may be extended and bent to surround the edge area of the top cap 300. The top cap 300 may be fixed on the beading portion 210 by the shape of the crimping portion 220.

The top cap 300 may have a vent portion 310 that is weakly configured compared to the surrounding area. The vent portion 310 may have a thinner thickness compared to the surrounding area. The vent portion 310 may be formed by partially reducing the thickness of the top cap 300 by notching on one or both sides of the top cap 300.

The terminal 700 may be located on the opposite side of the opening. The terminal 700 may be exposed to the outside of the battery housing 200 through a closed portion located on the opposite side of the opening. The terminal 700 may have the polarity of the second electrode. The terminal 700 may penetrate approximately the center of the lower surface of the battery housing 200.

The first current collector 500 may be located between the electrode assembly 100 and the top cap 300. The first current collector 500 may have a first coupling portion 510 that is electrically coupled to the electrode assembly 100. The first current collector 500 may be provided with a housing coupling portion 520 that is electrically coupled to the battery housing 200 on the inner surface of the battery housing 200. The first current collector 500 may have the polarity of the first electrode.

The second current collector 600 may be located between the electrode assembly 100 and the terminal 700. The second current collector 600 may have a second coupling portion that is electrically coupled to the electrode assembly 100. The second current collector 600 may be provided with a terminal 700 coupling portion that is electrically coupled to a portion where the terminal 700 is inserted into the battery housing 200 and has a substantially flat surface. The second current collector 600 may have the polarity of the second electrode.

The insulator 800 may be located on the electrode assembly 100 to insulate the battery housing 200 and the electrode assembly 100 on the closed portion. The insulator 800 may be interposed between the closed portion of the battery housing 200 and the electrode assembly 100 or between the closed portion of the battery housing 200 and the second current collector 600. The insulator 800 may include, for example, a resin material with insulating properties. The insulator 800 may have a hole at approximately the center so that the terminal 700 can be electrically connected to the second current collector 600.

The first gasket G1 may be provided between the top cap 300 and the battery housing 200. The first gasket G1 prevents the top cap 300 and the battery housing 200 from contacting each other.

The second gasket G2 may be provided between the terminal 700 and the battery housing 200. The second gasket G2 prevents the terminal 700 and the battery housing 200 from contacting each other.

The first gasket G1 and the second gasket G2 may be made of a resin material with insulating properties and elasticity.

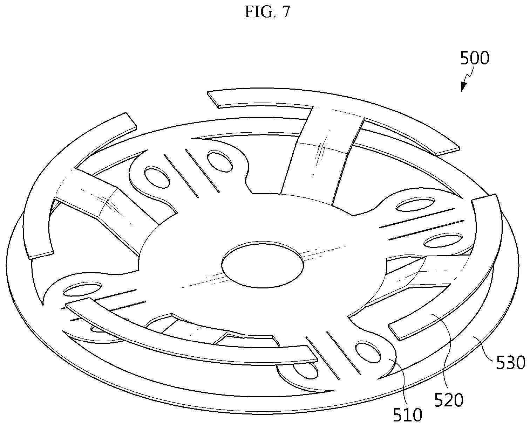

FIG. 6 is a diagram showing a cross section of a battery 10 according to another embodiment of the present disclosure. FIG. 7 is a diagram showing a first current collector 500 included in the battery 10 according to another embodiment of the present disclosure.

Referring to FIGS. 6 and 7, the first current collector 500 may include a beading portion protecting portion 530.

The beading portion protecting portion 530 may be provided between the beading portion 210 and the electrode assembly 100. The beading portion protecting portion 530 may extend along the circumferential direction of the battery 10. The beading portion protecting portion 530 may be formed integrally with the first coupling portion 510. The beading portion protecting portion 530 may be thicker than the first coupling portion 510. In this case, the first coupling portion 510 may extend from approximately the center to the inner surface of the battery housing 200 and be connected to the beading portion coupling portion 530. According to the structure of the battery 10 as described above, the first electrode 110, the first current collector 500, and the battery housing 200 have the same polarity, so there is no problem even if they are electrically connected. However, the beading portion protecting portion 530 is not a component of the first current collector 500, but is a separate component and may be configured to contact the first coupling portion 510.

According to this structure in the present disclosure, the beading portion protecting portion 530 is provided between the electrode assembly 100 and the beading portion 210, thereby more effectively protecting the beading portion 210 from gas and/or flame generated inside the battery 10. Additionally, when the first current collector 500 and the beading portion protecting portion material 530 are formed as one piece, the production and assembly process can be facilitated.

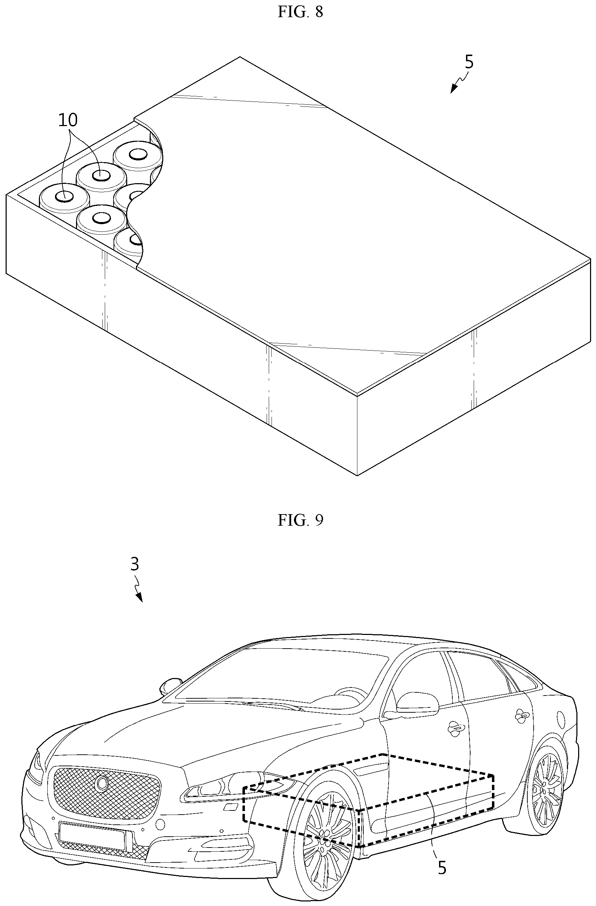

FIG. 8 is a diagram showing a battery pack 5 according to the present disclosure.

Referring to FIG. 8, the battery pack 5 according to the present disclosure may include the battery 10. The battery pack 5 may further include various components other than the battery 10, such as BMS, busbar, pack case, relay, current sensor, etc. known at the time of filing the present disclosure..

FIG. 9 is a drawing showing a vehicle 3 according to the present disclosure.

Referring to FIG. 9, the vehicle 3 according to the present disclosure may include the battery pack 5. The vehicle 3 may be a hybrid vehicle 3 or an electric vehicle 3. The vehicle 3 according to the present disclosure further includes various other components included in the vehicle 3 in addition to the battery pack 5. For example, the vehicle 3 according to the present disclosure may further include a vehicle body, a motor, and control devices such as an ECU (electronic control unit) in addition to the battery pack 5 according to the present disclosure.

As described above, the present disclosure has been described with a focus on preferred embodiments with reference to the accompanying drawings, but it is clear to those skilled in the art that many various obvious modifications can be made from this description without departing from the scope of the present disclosure. Accordingly, the scope of the present disclosure should be construed in terms of the appended claims to include such many modified examples.

### [Reference numerals]

3 vehicle
5 battery pack
¹⁰ battery
100 electrode assembly
100' stack
110 first electrode
111 first uncoated portion
112 first coated portion
120 second electrode
121 second uncoated portion
122 second coated portion
130 separator
200 battery housing
210 beading portion
220 crimping portion
300 top cap
310 venting portion
400 thermal conductive member
500 first current collector
510 first coupling portion

## Claims

1. A battery, comprising:
an electrode assembly;
a battery housing having an opening formed on one side to accommodate the electrode assembly through the opening and including a beading portion formed by press-fitting the perimeter of an outer circumference at the opening;
a top cap configured to cover the opening; and
a thermal conductive member configured to fill at least a portion of the space formed by the beading portion at the outer side of the battery housing.

2. The battery according to claim 1, wherein the thermal conductive member extends along the perimeter of the outer circumference of the battery housing.

3. The battery according to claim 1, wherein the thermal conductive member is a thermal conductive adhesive.

4. The battery according to claim 3, wherein the thermal conductive member contains a ceramic filler.

5. The battery according to claim 1, wherein the thermal conductive member has a hardness of 70Sh A or higher.

6. The battery according to claim 1, wherein the top cap has a venting portion that is weak compared to the surrounding area.

7. The battery according to claim 6, wherein the top cap is insulated from the electrode assembly and the battery housing and is configured to have no polarity.

8. The battery according to claim 1, further comprising a first current collector, which includes a first coupling portion electrically coupled to the electrode assembly at the opening; and a housing coupling portion that is electrically coupled to the battery housing.

9. The battery according to claim 1, wherein the first current collector includes a beading portion protecting portion provided between the beading portion and the electrode assembly.

10. The battery according to claim 9, wherein the beading portion protecting portion extends along the circumferential direction of the battery.

11. A battery pack, comprising the battery according to any one of claims 1 to 10.

12. A vehicle, comprising the battery pack according to claim 11.
